# FASCICULE DE BREVET EUROPEEN

(11) **EP 3 098 410 B1**
(45) Date de publication et mention de la délivrance du brevet: **26.09.2018**
(21) Numéro de dépôt: 16169612.5
(22) Date de dépôt: 13.05.2016
(51) Int. Cl.: F01N 3/24, F01N 3/28, F01N 13/18, F01N 3/10, F01N 3/021

(54) **SYSTÈME DE DÉPOLLUTION COMPACT D'UN VÉHICULE**
KOMPAKTES ABGASREINUGUNGSSYSTEM EINES FAHRZEUGS
COMPACT POLLUTION-CONTROL SYSTEM OF A VEHICLE

(30) Priorité: 28.05.2015 FR 1554826
(43) Date de publication de la demande: 30.11.2016
(73) Titulaire: Renault S.A.S., 92100 Boulogne-Billancourt (FR)
(72) Inventeur: SANCHEZ, Gerardo, 47015 Valladolid (ES); DEBROIS, Olivier, 47140 LAGUNA DE DUERO (ES)

(56) Documents cités:
- EP-A1- 0 758 048
- WO-A1-2013/168549
- US-A1- 2003 079 938
- US-A1- 2009 094 964

## Description

L'invention se rapporte à un système de dépollution compact d'un véhicule.

Un véhicule comprend généralement un groupe motopropulseur doté d'un moteur thermique et d'un système de dépollution des gaz d'échappement du moteur placé sur une ligne d'échappement dudit moteur. Ce système de dépollution permet de limiter les émissions de particules polluantes dans l'atmosphère, telles que par exemple, des particules de monoxyde de carbone(CO) ou d'oxyde d'azote (NOx). Généralement, un tel système de dépollution comprend un filtre (FAP) à particules et un catalyseur d'oxydation (DOC) montés en série sur la ligne d'échappement. Il se présente par exemple sous la forme d'un boîtier métallique de forme sensiblement cylindrique, renfermant un premier monolithe cylindrique en céramique imprégné de métaux précieux et assurant la fonction de filtration des particules de suies émises par le moteur, et un deuxième monolithe cylindrique coaxial au premier et sensiblement de même diamètre que celui-ci, et assurant la fonction de catalyseur d'oxydation.

Actuellement, certains types de véhicules, notamment les véhicules tout terrain à quatre roues motrices, comportent un module de renvoi de la transmission vers un train arrière, ledit module constituant une pièce encombrante. Puisque cette pièce est placée directement à proximité du système de dépollution, elle gêne, voire empêche, l'implantation d'un système de dépollution de type cylindrique sur la ligne d'échappement du moteur, car le diamètre du boîtier est trop grand. En d'autres termes, l'encombrement radial du boîtier est trop grand, au moins sur une portion de la longueur du boîtier, pour permettre le passage du module de renvoi de la transmission.

On connaît plusieurs systèmes de dépollution qui visent à diminuer localement l'encombrement radial d'un tel système de dépollution. Par exemple, la publication EP-B1-0824184 mentionne un système de dépollution comprenant un catalyseur d'amorçage et un catalyseur principal cylindriques montés en série dans un boîtier présentant une symétrie de révolution. Le catalyseur présente un diamètre qui est nettement inférieur au diamètre du catalyseur d'amorçage. Le tronçon cylindrique du boîtier qui renferme le catalyseur est relié au tronçon cylindrique du boîtier qui renferme le catalyseur d'amorçage par un tronçon qui a la forme d'un cône tronqué.

Un tel système peut s'insérer dans un espace réduit grâce à la diminution du diamètre du catalyseur, la fonction originale de dépollution de celui-ci pouvant être alors préservée simplement en augmentant sa longueur pour compenser au moins partiellement la perte de volume due à la diminution du diamètre. Mais ce système présente l'inconvénient d'être complexe à fabriquer, car il nécessite de réaliser le boîtier à partir d'au moins deux pièces métalliques distinctes et de les souder entre elles.

La demande US 2009/0094964 décrit un système de dépollution des gaz d'échappement d'un groupe motopropulseur de véhicule, comportant un boitier logeant un catalyseur d'oxydation et un filtre à particules, ledit boitier possédant un méplat s'étendant parallèlement à l'axe de révolution dudit boitier et réduisant sa section transversale.

Un système de dépollution selon l'invention est dimensionné pour venir s'insérer dans un espace réduit situé à coté du module de renvoi, tout en maintenant intacte sa fonction originelle de dépollution et en étant très simple à fabriquer.

L'invention a pour objet un système de dépollution des gaz d'échappement d'un groupe motopropulseur d'un véhicule, comportant un boitier destiné à être monté sur une ligne d'échappement d'un moteur thermique de véhicule, ledit boitier comportant un catalyseur d'oxydation et un filtre à particules.

La principale caractéristique d'un système de dépollution selon l'invention, est que le boitier est allongé et possède un méplat apte à diminuer la section transversale dudit boitier, ledit méplat s'étendant au moins partiellement le long dudit boitier. Ainsi, grâce à la présence de ce méplat, la section transversale du boitier est réduite au niveau de ce méplat, permettant audit boitier d'être facilement monté sur la ligne d'échappement malgré la présence d'un module de renvoi encombrant. La présence de ce méplat limite également les pertes de volume au niveau du boitier, permettant au système de dépollution de conserver intacte sa fonction de dépollution. Selon l'invention, le méplat est réalisé au niveau de la partie du boitier placée autour du filtre à particules ou au niveau de la partie du boîtier placée autour du catalyseur d'oxydation, et la longueur du méplat correspond à la longueur du filtre à particules ou à la longueur du catalyseur d'oxydation. Avantageusement, le boitier est de forme sensiblement cylindrique.

Avantageusement, le méplat s'étend le long du boitier sur au moins 30% de sa longueur totale. En effet, au dessous de cette limite, la présence du méplat ne permet pas de compacter suffisamment le boitier pour qu'il puisse s'insérer à coté du module de renvoi.

De façon avantageuse, la présence du méplat engendre la création d'un tronçon de zone de transition entre la partie du boitier possédant le méplat et la partie dudit boitier ne le possédant pas, ledit tronçon étant une section progressive. Autrement dit, le tronçon de transition ne crée pas une cassure brutale entre les deux parties du boitier, mais permet au contraire à la partie ne possédant pas le méplat de se rétrécir progressivement pour se retrouver en parfaite correspondance avec la partie possédant le méplat. Une cassure trop nette entre lesdites deux parties n'est pas souhaitable dans la mesure où l'épaulement résultant pourrait dégrader l'arrosage du filtre à particules en perturbant trop l'écoulement des gaz d'échappement.

Avantageusement, la longueur du boitier est augmentée au maximum de 5% par rapport à la longueur totale d'un boitier existant ne possédant pas de méplat. En effet, afin de compenser la faible perte de volume du boitier liée à la présence du méplat, il est souhaitable d'augmenter légèrement sa longueur afin de conserver le volume total du système de dépollution et donc de maintenir intacte son activité de dépollution. Autrement dit, si le méplat engendre une perte de volume du filtre à particules, la longueur dudit filtre sera augmentée afin de compenser cette perte de volume. Si le méplat engendre une perte de volume du catalyseur, la longueur dudit catalyseur sera augmentée afin de compenser cette perte de volume. De façon avantageuse, le boitier est en métal.

De façon préférentielle, le boitier doté du méplat est réalisé en une seule pièce. De cette manière la fabrication de ce boitier est simple et rapide, puisqu'elle n'est réalisée que par un procédé de déformation en un ou plusieurs coups. De manière connue en soi, elle peut être obtenue à l'aide d'un outil progressif jusqu'à obtention de la géométrie finale. Aucune opération de soudure n'est nécessaire au procédé de fabrication, contrairement aux systèmes de dépollution étagés connus.

Préférentiellement, le boitier possède une première ouverture située du coté du catalyseur et une deuxième ouverture située du coté du filtre à particules, ladite première ouverture étant destinée à être connectée à un conduit d'arrivée des gaz d'échappement, et ladite deuxième ouverture étant destinée à être connectée à un conduit d'évacuation de gaz propres.

L'invention a pour autre objet un groupe motopropulseur comprenant un moteur thermique et une ligne d'échappement.

La principale caractéristique d'un groupe motopropulseur selon l'invention, est qu'il comprend un système de dépollution conforme à l'invention, ledit système étant monté sur ladite ligne d'échappement de sorte que le catalyseur soit placé en amont du filtre à particules.

Avantageusement, un conduit d'arrivée des gaz d'échappement est en communication avec le boitier au niveau du catalyseur et un conduit d'évacuation de gaz propres est en communication avec le boitier au niveau de du filtre à particules.

Un système de dépollution selon l'invention présente l'avantage de posséder une certaine compacité lui permettant d'être monté dans un espace réduit du véhicule, tout en conservant intacte son activité de dépollution au sein dudit véhicule. Il a de plus l'avantage de pouvoir être fabriqué facilement et rapidement par seule déformation malgré la présence du méplat.

On donne, ci-après, une description détaillée d'un mode de réalisation préféré d'un système de dépollution selon l'invention, en se référant aux figures 1 à 5.
- La figure lest une vue de coté d'un système de dépollution selon l'état de la technique,
- La figure 2 est une vue en coupe axiale longitudinale du système de dépollution de la figure 1,
- La figure 3A est une première vue de coté d'un système de dépollution selon l'état de la technique,
- La figure 3B est une deuxième vue de coté du système de dépollution de la figure 3A ayant subi une rotation autour de son axe longitudinal,
- La figure 4A est une vue en coupe axiale longitudinale du système de dépollution des figures 3A et 3B,
- La figure 4B est une vue en coupe transversale du système de dépollution des figures 3A et 3B, au niveau du filtre à particules,
- La figure 5 est une vue générale d'une architecture de véhicule montrant l'emplacement d'un système de dépollution selon l'invention et d'un module de renvoi.

Un groupe motopropulseur d'un véhicule comprend un moteur thermique et une ligne d'échappement sur laquelle est disposé un système de dépollution 1 des gaz d'échappement émis par ledit moteur. De cette manière, lesdits gaz transitent d'abord par le système de dépollution 1 avant d'être évacués hors du véhicule en étant propres. Un tel système de dépollution 1 est conçu pour limiter, voire éliminer, les particules polluantes telles que par exemple les particules de monoxyde de carbone et d'oxyde d'azote.

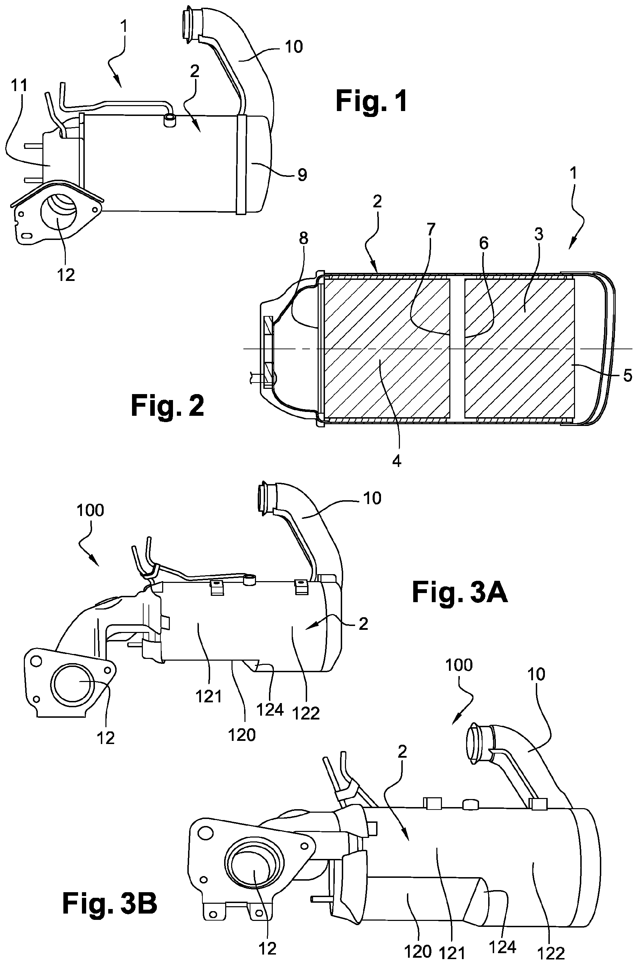

En se référant aux figures 1 et 2, un système de dépollution 1 selon l'état de la technique, est délimité par un boitier 2 cylindrique allongé, préférentiellement réalisé en métal, et logeant un catalyseur 3 d'oxydation et un filtre 4 à particules. Le boitier 2 est une pièce cylindrique creuse ayant un diamètre constant. Sur la ligne d'échappement, le catalyseur 3 d'oxydation est placé en amont du filtre 4 à particules. Schématiquement, le catalyseur 3 est cylindrique et présente une face d'entrée 5 et une face de sortie 6. De même, le filtre 4 à particules est cylindrique et présente une face d'entrée 7 et une face de sortie 8. Le boitier 2 comporte à l'une 9 de ses extrémités une première ouverture mise en communication avec un conduit 10 d'arrivée des gaz d'échappement en provenance du moteur, ladite première ouverture étant située sur le boitier 2 de telle sorte que les gaz d'échappement arrivent sur la face d'entrée 5 du catalyseur 3. Le boitier 2 comporte à une autre extrémité 11, une deuxième ouverture mise en communication avec un conduit 12 d'évacuation de gaz propres, lesdits gaz résultant des gaz d'échappement qui auront d'abord transité par le catalyseur 3 avant de traverser le filtre 4 à particules. Cette deuxième ouverture est située sur le boitier 2 de telle sorte que les gaz propres sortant de la face de sortie 8 du filtre 4 à particules, puissent être évacués par le conduit 12 d'évacuation. En ayant un diamètre constant autour du catalyseur 3 et du filtre 4 à particules, le boitier 2 est encombrant et ne peut plus être utilisé sur certains types de véhicules, notamment ceux dotés d'un module de renvoi 13.

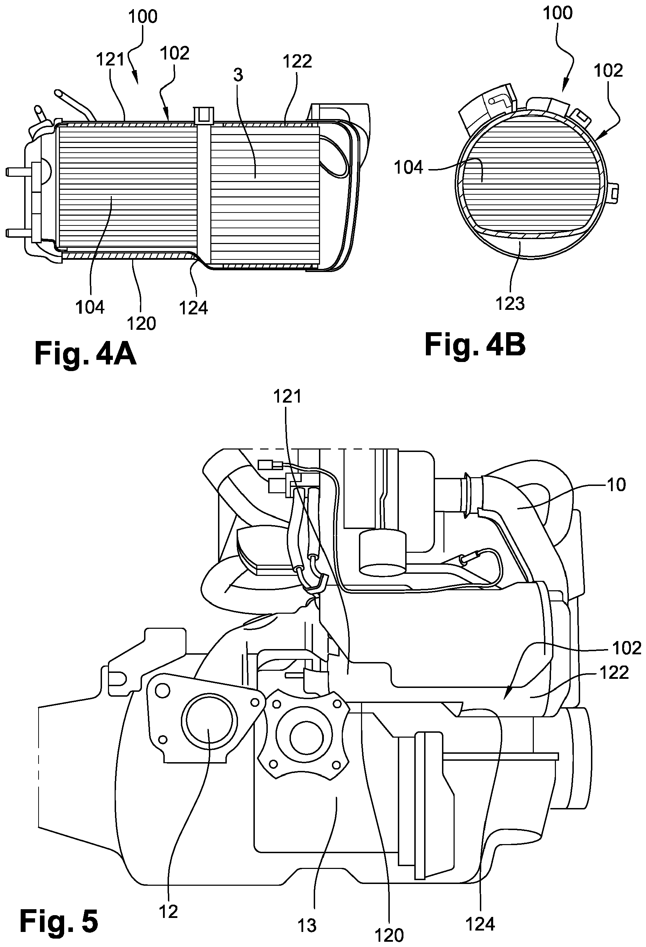

En effet, en se référant à la figure 5, les véhicules tout terrain ayant quatre roues motrices, sont dotés d'un module 13 de renvoi de la transmission vers un train arrière dudit véhicule. Or ce module 13 occupe un volume important, rendant compliquée, voire impossible, l'implantation d'un système de dépollution 1 ayant un boitier 2 cylindrique de diamètre constant sur toute sa longueur.

En se référant aux figures 3A, 3B, 4A, 4B et 5, un système de dépollution 100 selon l'invention est conçu pour pouvoir être implanté dans un environnement encombré, impliquant par exemple un module de renvoi ou toute autre pièce encombrante, tout en conservant ses propriétés de dépollution. Pour réaliser cette implantation, la forme du boitier 102 a été modifiée de manière à présenter un méplat 120 destiné à réduire sa section transversale.

En se référant aux figures 3A, 3B et 4A, le méplat 120 s'étend sur un peu plus de la moitié de la longueur du boitier 102, et est pratiqué au niveau de la partie 121 dudit boitier 102 enfermant le filtre 104 à particules. Cette partie 121 possède donc une section transversale réduite par rapport à celle de la partie 122 dudit boitier 102 enfermant le catalyseur 3. La transition entre ces deux parties 121, 122 est progressive au moyen d'un tronçon 124 de liaison du boitier 102, dont la section transversale diminue progressivement entre celle de la partie 122 dépourvue du méplat 120 et celle possédant ledit méplat 120. Par rapport à un système de dépollution 1 de l'état de la technique, les dimensions dudit catalyseur 3 demeurent inchangées, tandis que celles du filtre 104 à particules ont diminué en raison du méplat 120.

La figure 4B, illustre la perte 123 de section du filtre 104 à particules engendrée par la présence du méplat 120. Afin de garder constant le volume du filtre à particules 104, le boitier 102 a été allongé suivant son axe longitudinal, l'élément de longueur ainsi ajouté n'excédant pas 5% de la longueur totale dudit boitier 102. Le rallongement du boitier 102 permet ainsi de rallonger le filtre à particules.

De façon schématique, le boitier 102 d'un système de dépollution 100 selon l'invention est légèrement rallongé par rapport à un boitier 2 d'un système de dépollution 1 existant, mais possède en revanche un partie 121, en l'occurrence celle renfermant le filtre 104 à particules, de section réduite.

En se référant à la figure 5, un système de dépollution 100 possédant un tel boitier 102 doté d'un méplat 120, peut être implanté sans difficulté sur une ligne d'échappement d'un véhicule tout terrain, possédant quatre roues motrices et doté d'un module de renvoi 13 de la transmission vers un train arrière dudit véhicule.

Bien entendu, l'invention n'est pas limitée au mode de réalisation qui vient d'être décrit. En particulier, en fonction des contraintes d'implantation, le méplat peut être réalisé sur la partie du boîtier qui renferme le catalyseur d'oxydation plutôt que sur celle qui renferme le filtre à particules. De la même manière, l'utilisation du système, qui a été conçu pour des véhicules présentant un module de renvoi encombrant, pourra servir pour résoudre toute autre être contrainte d'implantation.

## Revendications

1. Système de dépollution (100) des gaz d'échappement d'un groupe motopropulseur de véhicule, comportant un boitier (2, 102) destiné à être monté sur une ligne d'échappement d'un moteur thermique de véhicule, ledit boitier (2, 102) comportant un catalyseur (3) d'oxydation et un filtre à particules (4, 104), ledit boitier (102) étant allongé et possédant un méplat (120) apte à diminuer la section transversale dudit boitier (102), et s'étendant au moins partiellement le long dudit boitier (102), ledit méplat (120) étant réalisé au niveau de la partie (121) du boitier (102) placée autour du filtre à particules (104) ou au niveau de la partie (122) du boitier (102) placée autour du catalyseur (3) d'oxydation, ledit système étant **caractérisé en ce que** la longueur du méplat (120) correspond à la longueur du filtre à particules (104) ou à la longueur du catalyseur (3) d'oxydation.

2. Système de dépollution selon la revendication 1, **caractérisé en ce que** le méplat (120) s'étend le long du boitier (102) sur au moins 30% de sa longueur totale.

3. Système de dépollution selon l'une quelconque des revendications 1 ou 2, **caractérisé en ce que** la présence du méplat (120) engendre la création d'un tronçon de transition (124) entre la partie (121) du boitier (102) possédant le méplat (120) et la partie (122) dudit boitier (102) ne le possédant pas, ledit tronçon (124) ayant une section progressive.

4. Système de dépollution selon l'une quelconque des revendications 1 à 3, **caractérisé en ce que** la longueur du boitier (102) est augmentée au maximum de 5% par rapport à la longueur totale d'un boitier (2) existant ne possédant pas de méplat (120).

5. Système de dépollution selon l'une quelconque des revendications 1 à 4, **caractérisé en ce que** le boitier (102) doté du méplat (120) est réalisé en une seule pièce.

6. Système de dépollution selon l'une quelconque des revendications 1 à 5, **caractérisé en ce que** le boitier (102) possède une première ouverture située du coté du catalyseur (3) et une deuxième ouverture située du coté du filtre à particules (104), et **en ce que** ladite première ouverture est destinée à être connectée à un conduit d'arrivée (10) des gaz d'échappement et ladite deuxième ouverture est destinée à être connectée à un conduit d'évacuation (12) de gaz propres.

7. Groupe motopropulseur comprenant un moteur thermique et une ligne d'échappement, **caractérisé en ce qu'**il comprend un système de dépollution (100) conforme à l'une quelconque des revendications 1 à 6, ledit système (100) étant monté sur ladite ligne d'échappement de sorte que le catalyseur (3) soit placé en amont du filtre à particules (104).

8. Groupe motopropulseur selon la revendication 7, **caractérisé en ce qu'**un conduit d'arrivée (10) des gaz d'échappement est en communication avec le boitier (102, 122) au niveau du catalyseur (3), et **en ce qu'**un conduit d'évacuation (12) de gaz propres est en communication avec le boitier (102, 121) au niveau de du filtre à particules (104).

9. Procédé de montage dans un véhicule d'un système de dépollution (100) conforme à l'une quelconque des revendications 1 à 6, **caractérisé en ce qu'**il comprend les étapes suivantes,
- Une étape de réalisation d'un méplat (120) dans le boitier (102) apte à diminuer la section transversale dudit boitier (102), ledit méplat (120) s'étendant au moins partiellement le long dudit boitier (102) de sorte que le méplat (120) soit réalisé au niveau de la partie (121) du boitier (102) placée autour du filtre à particules (104) ou au niveau de la partie (122) du boitier (102) placée autour du catalyseur (3) d'oxydation, et que la longueur du méplat (120) corresponde à la longueur du filtre à particules (104) ou à la longueur du catalyseur (3) d'oxydation,
- Une étape de montage du boitier (102) dont la section transversale a été partiellement réduite sur la ligne d'échappement.

## Patentansprüche

1. System zur Reinigung (100) der Abgase einer Antriebseinheit eines Fahrzeugs, das ein Gehäuse (2, 102) aufweist, das dazu bestimmt ist, auf eine Abgasanlage eines Verbrennungsmotors eines Fahrzeugs montiert zu werden, wobei das Gehäuse (2, 102) einen Oxidationskatalysator (3) und einen Partikelfilter (4, 104) aufweist, wobei das Gehäuse (102) länglich ist und eine Abflachung (120) besitzt, die den Querschnitt des Gehäuses (102) verringern kann und sich zumindest teilweise entlang des Gehäuses (102) erstreckt, wobei die Abflachung (120) im Bereich des Teils (121) des Gehäuses (102) hergestellt ist, der um den Partikelfilter (104) herum angeordnet ist, oder im Bereich des Teils (122) des Gehäuses (102) hergestellt ist, der um den Oxidationskatalysator (3) herum angeordnet ist, wobei das System **dadurch gekennzeichnet ist, dass** die Länge der Abflachung (120) der Länge des Partikelfilters (104) oder der Länge des Oxidationskatalysators (3) entspricht.

2. Reinigungssystem nach Anspruch 1, **dadurch gekennzeichnet, dass** die Abflachung (120) sich entlang des Gehäuses (102) über mindestens 30% seiner Gesamtlänge erstreckt.

3. Reinigungssystem nach einem der Ansprüche 1 oder 2, **dadurch gekennzeichnet, dass** das Vorhandensein der Abflachung (120) die Erzeugung eines Übergangsabschnitts (124) zwischen dem Teil (121) des Gehäuses (102), der die Abflachung (120) besitzt, und dem Teil (122) des Gehäuses (102) verursacht, der sie nicht besitzt, wobei der Abschnitt (124) einen progressiven Querschnitt hat.

4. Reinigungssystem nach einem der Ansprüche 1 bis 3, **dadurch gekennzeichnet, dass** die Länge des Gehäuses (102) um höchstens 5% bezüglich der Gesamtlänge eines existierenden Gehäuses (2) erhöht wird, das keine Abflachung (120) besitzt.

5. Reinigungssystem nach einem der Ansprüche 1 bis 4, **dadurch gekennzeichnet, dass** das mit der Abflachung (120) versehene Gehäuse (102) aus einem Stück hergestellt wird.

6. Reinigungssystem nach einem der Ansprüche 1 bis 5, **dadurch gekennzeichnet, dass** das Gehäuse (102) eine erste Öffnung, die sich auf der Seite des Katalysators (3) befindet, und eine zweite Öffnung besitzt, die sich auf der Seite des Partikelfilters (104) befindet, und dass die erste Öffnung dazu bestimmt ist, mit einem Einlasskanal (10) der Abgase verbunden zu werden, und die zweite Öffnung dazu bestimmt ist, mit einem Abzugskanal (12) sauberer Gase verbunden zu werden.

7. Antriebseinheit, die einen Verbrennungsmotor und eine Abgasanlage enthält, **dadurch gekennzeichnet, dass** sie ein Reinigungssystem (100) nach einem der Ansprüche 1 bis 6 enthält, wobei das System (100) so auf die Abgasanlage montiert wird, dass der Katalysator (3) sich stromaufwärts vor dem Partikelfilter (104) befindet.

8. Antriebseinheit nach Anspruch 7, **dadurch gekennzeichnet, dass** ein Einlasskanal (10) der Abgase im Bereich des Katalysators (3) mit dem Gehäuse (102, 122) in Verbindung steht, und dass ein Abzugskanal (12) sauberer Gase im Bereich des Partikelfilters (104) mit dem Gehäuse (102, 121) in Verbindung steht.

9. Verfahren zum Einbau eines Reinigungssystems (100) nach einem der Ansprüche 1 bis 6 in ein Fahrzeug, **dadurch gekennzeichnet, dass** es die folgenden Schritte enthält:
- einen Schritt der Herstellung einer Abflachung (120) im Gehäuse (102), die den Querschnitt des Gehäuses (102) verringern kann, wobei die Abflachung (120) sich mindestens teilweise entlang des Gehäuses (102) erstreckt, so dass die Abflachung (120) im Bereich des Teils (121) des Gehäuses (102), der um den Partikelfilter (104) herum angeordnet ist, oder im Bereich des Teils (122) des Gehäuses (102) hergestellt wird, der um den Oxidationskatalysator (3) herum angeordnet ist, und dass die Länge der Abflachung (120) der Länge des Partikelfilters (104) oder der Länge des Oxidationskatalysators (3) entspricht,
- einen Schritt der Montage des Gehäuses (102), dessen Querschnitt teilweise reduziert wurde, auf die Abgasanlage.

## Claims

1. Pollution-control system (100) for the exhaust gases of a vehicle propulsion unit, comprising a housing (2, 102) intended to be mounted on an exhaust line of a vehicle combustion engine, the said housing (2, 102) comprising an oxidation catalyst (3) and a particulate filter (4, 104), the said housing (102) being elongate and having a flat (120) designed to reduce the cross section of the said housing (102) and at least partially extending along the said housing (102), the said flat (120) being produced at the portion (121) of the housing (102) that is placed around the particulate filter (104) or at the portion (122) of the housing (102) that is placed around the oxidation catalyst (3), the said system being **characterized in that** the length of the flat (120) corresponds to the length of the particulate filter (104) or to the length of the oxidation catalyst (3).

2. Pollution-control system according to Claim 1, **characterized in that** the flat (120) extends along the housing (102) over at least 30% of its total length.

3. Pollution-control system according to either one of Claims 1 and 2, **characterized in that** the presence of the flat (120) generates the creation of a transition portion (124) between the portion (121) of the housing (102) having the flat (120) and the portion (122) of the said housing (102) not having it, the said portion (124) having a progressive cross section.

4. Pollution-control system according to any one of Claims 1 to 3, **characterized in that** the length of the housing (102) is increased by at most 5% with respect to the total length of an existing housing (2) not having a flat (120).

5. Pollution-control system according to any one of Claims 1 to 4, **characterized in that** the housing (102) provided with the flat (120) is produced as a single part.

6. Pollution-control system according to any one of Claims 1 to 5, **characterized in that** the housing (102) has a first opening situated on the catalyst (3) side and a second opening situated on the particulate filter (104) side, and **in that** the said first opening is intended to be connected to an exhaust-gas inlet duct (10) and the said second opening is intended to be connected to a clean-gas discharge duct (12).

7. Propulsion unit comprising a combustion engine and an exhaust line, **characterized in that** it comprises a pollution-control system (100) according to any one of Claims 1 to 6, the said system (100) being mounted on the said exhaust line such that the catalyst (3) is placed upstream of the particulate filter (104).

8. Propulsion unit according to Claim 7, **characterized in that** an exhaust-gas inlet duct (10) is in communication with the housing (102, 122) at the catalyst (3), and **in that** a clean-gas discharge duct (12) is in communication with the housing (102, 121) at the particulate filter (104) .

9. Method for mounting a pollution-control system (100) according to any one of Claims 1 to 6 in a vehicle, **characterized in that** it comprises the following steps:
- a step of producing a flat (120) in the housing (102) that is designed to reduce the cross section of the said housing (102), the said flat (120) at least partially extending along the said housing (102) such that the flat (120) is produced at the portion (121) of the housing (102) that is placed around the particulate filter (104) or at the portion (122) of the housing (102) that is placed around the oxidation catalyst (3), and such that the length of the flat (120) corresponds to the length of the particulate filter (104) or to the length of the oxidation catalyst (3),
- a step of mounting the housing (102), the cross section of which has been partially reduced, on the exhaust line.
